# EUROPEAN PATENT SPECIFICATION

(11) **EP 4 560 758 B1**
(45) Date of publication and mention of the grant of the patent: **16.09.2026**
(21) Application number: 24206802.1
(22) Date of filing: 16.10.2024
(51) Int. Cl.: H01M 10/0525, H01M 10/056, H01M 4/133, H01M 4/04, H01M 4/58, H01M 4/02

(54) **BATTERY, ENERGY STORAGE DEVICE, ELECTRICAL SYSTEM AND ENERGY STORAGE SYSTEM**
BATTERIE, ENERGIESPEICHERVORRICHTUNG, ELEKTRISCHES SYSTEM UND ENERGIESPEICHERSYSTEM
BATTERIE, DISPOSITIF DE STOCKAGE D'ÉNERGIE, SYSTÈME ÉLECTRIQUE ET SYSTÈME DE STOCKAGE D'ÉNERGIE

(30) Priority: 24.11.2023 CN 202311594554
(43) Date of publication of application: 28.05.2025
(73) Proprietor: Hithium Tech HK Limited, Hong Kong (HK)
(72) Inventor: XU, Kun, Xiamen, 361100 (CN)
(74) Representative: RGTH

(56) References cited:
- EP-A1- 4 273 961
- CN-A- 116 666 565

## Description

### TECHNICAL FIELD

The present application relates to the field of electronics, and specifically, to a battery, energy storage device, electrical system and energy storage system.

### BACKGROUND

With the promotion of policies and market demand, the energy storage industry is developing rapidly, and the demand for energy storage density of the battery is constantly increasing.

CN 116 666 565 A (SHENZHEN HAICHEN ENERGY STORAGE CONTROL TECH CO LTD ET AL.) 29 August 2023(2023-08-29) discloses a negative pole piece, battery and electric equipment.

### SUMMARY

The invention is set out in the appended set of claims.

The embodiment of the first aspect of the present application provides a battery. The battery comprises a negative electrode sheet and an electrolyte. The negative electrode sheet comprises a negative electrode material. In a case that a state of charge of the battery ranges 95% to 105%, a differential scanning calorimetry curve of a mixture of the negative electrode material and the electrolyte has a first exothermic peak, a second exothermic peak and a third exothermic peak. A peak temperature of the first exothermic peak is T1, a peak temperature of the second exothermic peak is T2, and a peak temperature of the third exothermic peak is T3. The battery satisfies a relationship: 2≤(T2-T1)/(T3-T2)≤4.5.

Furthermore, the electrolyte comprises lithium hexafluorophosphate and lithium bis(fluorosulfonyl)imide, and in the electrolyte, a mass ratio ε of the lithium hexafluorophosphate to the lithium bis(fluorosulfonyl)imide is in a range of 0.3 ≤ ε ≤ 20.

The embodiment of the second aspect of the present application provides an energy storage device. The energy storage device comprises: a box; and a plurality of batteries described in the first aspect of the present application. The plurality of batteries are accommodated in the box, and a connection manner of the plurality of batteries comprises at least one of a series connection or a parallel connection.

The embodiment of the third aspect of the present application provides an electrical system. The electrical system comprises: an electrical equipment; and the energy storage device described in the second aspect of the present application. The energy storage device supplies power to the electrical equipment.

The embodiment of the fourth aspect of the present application provides an energy storage system. The energy storage system comprises: an electric energy conversion device, the energy storage device described in the second aspect of the present application, and an electrical load. The electric energy conversion device is configured to convert energy of other form into an electric energy. The energy storage device is electrically connected to the electric energy conversion device, and is configured to store the electric energy of the electric energy conversion device. The electrical load is electrically connected to the electric energy conversion device and the energy storage device, respectively, and is configured to work using the electric energy of the electric energy conversion device or the energy storage device.

### BRIEF DESCRIPTION OF THE DRAWINGS

In order to more clearly illustrate the technical solutions in the embodiments of the present application, the accompanying drawings to be used in the embodiments will be briefly introduced below. Obviously, the drawings in the following description are only some embodiments of the present application. For those of ordinary skill in the art, other drawings can be obtained based on these drawings without paying creative efforts.
FIG. 1 is an application scenario diagram of an energy storage system provided in an embodiment of the present application.
FIG. 2 is a schematic diagram of a structure of an energy storage system in an embodiment of the present application.
FIG. 3 is a circuit block diagram of an energy storage system in an embodiment of the present application.
FIG. 4 is a schematic diagram of a structure of an electrical system in an embodiment of the present application, where the electrical equipment and the energy storage device are in a separated state.
FIG. 5 is a schematic diagram of a partial explosion structure of an energy storage device in an embodiment of the present application.
FIG. 6 is a schematic diagram of a structure of a battery in an embodiment of the present application.
FIG. 7 is a schematic diagram of a cross-sectional structure of a battery in an embodiment of the present application along an A-A direction in FIG. 6.
FIG. 8 is a schematic diagram of a cross-sectional structure of a negative electrode sheet in an embodiment of the present application.
FIG. 9 is a schematic diagram of a cross-sectional structure of a positive electrode sheet in an embodiment of the present application.
FIG. 10 is a DSC spectrum of a mixture of the negative electrode material and the electrolyte of the battery in the fifth embodiment.

Description of reference signs:
100-energy storage device, 110-box, 200-electrical system, 210-electrical equipment, 300-energy storage system, 310-electric energy conversion device, 330-electrical load, 400-battery, 410-negative electrode sheet, 411-negative current collector, 413-negative active layer, 430-separator, 450-positive electrode sheet, 451-positive current collector, 453-positive active layer, 470-housing, 471-accommodation chamber, 490-cover plate.

### DETAILED DESCRIPTION

In order to enable the person skilled in the art to better understand the solutions of the present application, the technical solutions in the embodiments of the present application will be clearly and completely described in conjunction with the drawings in the embodiments of the present application. Obviously, the described embodiments are only a part of the embodiments of the present application, not all of the embodiments.

The terms "first", "second", etc. in the specification and claims of the present application and the above-mentioned drawings are used to distinguish different objects, not to describe a specific order. In addition, the terms "comprise" and "have" and any of their variations are intended to cover non-exclusive inclusions. For example, a process, method, system, product or device that comprises a series of steps or units is not limited to the listed steps or units, but optionally also comprises unlisted steps or units, or optionally also comprises other steps or units inherent to the process, method, product or device.

The technical solutions in the embodiments of the present application will be described in conjunction with the drawings.

It can be noted that, for the sake of convenience, in the embodiments of the present application, the same reference sign represents the same component, and for the sake of simplicity, detailed descriptions of the same component are omitted in different embodiments.

At present, the generation of green electricity generally relies on photovoltaics, wind power, water potential, etc. The wind energy, solar energy and the like generally have problems of strong intermittency and large volatility, which will cause instability of the power grid, insufficient electricity during peak power consumption, and too much electricity during off-peak power consumption. Unstable voltage will also cause damage to electricity. Therefore, the problems of "abandoning wind and light" may be caused due to insufficient electricity demand or insufficient grid acceptance capacity. To solve these problems, energy storage is relied on. That is, the electric energy is converted into other forms of energy through physical or chemical means and stored, and the stored energy is converted into electric energy and released when needed. In simple terms, energy storage is like a large "power bank". When photovoltaic and wind energy are sufficient, electric energy is stored, and the stored electricity is released when needed.

Taking electrochemical energy storage as an example, this solution provides an energy storage device with a chemical battery inside. The chemical elements in the battery are mainly used as energy storage media. The charging and discharging process is accompanied by chemical reactions or changes in the energy storage media. Simply put, the electric energy generated by wind and solar energy is stored in the chemical battery. When the use of external electric energy reaches a peak, the stored electricity is released for use, or transferred to places where electricity is scarce for use.

At present, the application scenarios of energy storage (i.e., energy accumulation) are quite extensive, comprising power generation side energy storage, grid side energy storage, renewable energy grid-connected energy storage, and user side energy storage. The corresponding types of energy storage devices comprise the follows.

(1) Large container-type energy storage devices are used in grid side energy storage scenarios. The large container-type energy storage devices can be used as high-quality active and reactive power regulation power sources in the grid to achieve load matching of electric energy in time and space, enhance the renewable energy assumption capacity, and are of great significance in grid system backup, relieving power supply pressure at peak load, and regulations of peak and frequency.

(2) Small and medium-sized energy storage cabinets are used in industrial and commercial energy storage scenarios (banks, shopping malls, etc.) on the user side and small household energy storage boxes used in household energy storage scenarios on the user side. The main operating mode is "peak shaving and valley filling". There is a large price difference in electricity bills at peak and valley according to electricity demand. After users have the energy storage device, in order to reduce costs, they usually charge the energy storage cabinets/boxes during the low electricity price period. During the peak electricity price period, the electricity in the energy storage device is discharged for use to achieve the purpose of saving electricity bills. In addition, in remote areas, as well as areas prone to natural disasters such as earthquakes and hurricanes, the presence of household energy storage devices is equivalent to users providing backup power for themselves and the power grid, eliminating the inconvenience caused by frequent power outages due to disasters or other reasons.

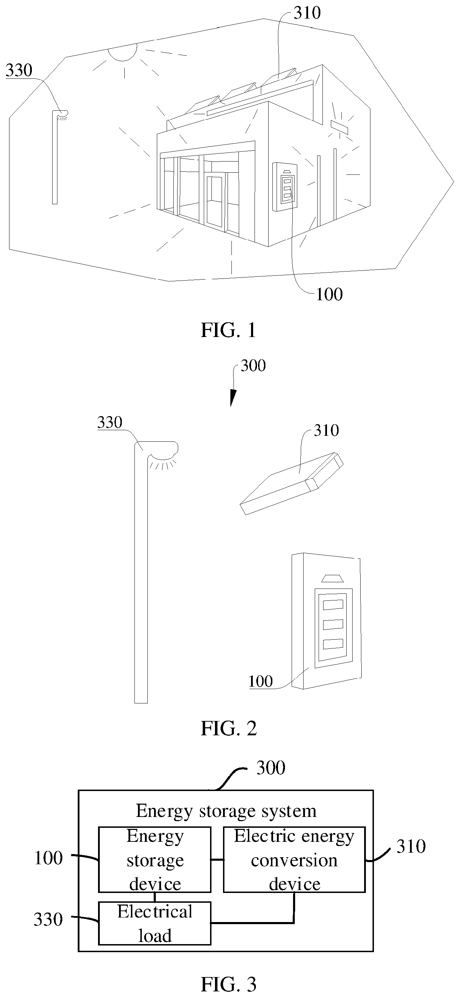

FIG. 1 is an application scenario diagram of an energy storage system 300 provided in an embodiment of the present application. The embodiment of FIG. 1 of the present application is illustrated by taking the household energy storage scenario in user-side energy storage as an example, and an energy storage device 100 of the present application is not limited to the household energy storage scenario. FIG. 2 is a structural schematic diagram of the energy storage system 300 of an embodiment of the present application. FIG. 3 is a circuit block diagram of the energy storage system 300 of an embodiment of the present application.

Referring to FIGs. 1 to 3, the present application provides an energy storage system 300, which is a household energy storage system 300. The energy storage system 300 comprises an electric energy conversion device 310, an energy storage device 100, and an electrical load 330. The electric energy conversion device 310 is used to convert other forms of energy into electric energy. The energy storage device 100 is electrically connected to the electric energy conversion device 310 and is used to store the electric energy of the electric energy conversion device 310. The electrical load 330 is electrically connected to the electric energy conversion device 310 and the energy storage device 100, respectively, and is used to work with the electric energy of the electric energy conversion device 310 or the energy storage device 100. It can be understood that part of the electric energy converted by the electric energy conversion device 310 is stored in the energy storage device 100, and another part of the electric energy converted by the electric energy conversion device 310 is used to power the electrical load 330. The energy storage device 100 is used to store electric energy and supply it to the electrical load 330 when the electricity price is peak. The energy storage system 300 can convert other forms of energy into electric energy and store electric energy in the energy storage device 100 to supply the electrical load 330 with sufficient electric energy.

Optionally, the electric energy conversion device 310 can convert at least one of solar energy, light energy, wind energy, thermal energy, tidal energy, biomass energy or mechanical energy into electric energy, and provide a stable power supply for the electrical load 330 and the energy storage device 100.

Optionally, the electric energy conversion device 310 may be a photovoltaic panel. The photovoltaic panel can convert solar energy into electric energy and store it in the energy storage device 100 during the period of low electricity prices. In other embodiments, it may also be at least one of a wind power generation device, a thermal power generation device, a tidal power generation device, a biomass power generation device or a mechanical power generation device.

Optionally, the energy storage device 100 is a small energy storage box that can be mounted on an outdoor wall by wall hanging. In other embodiments, the energy storage device 100 can also be a large container-type energy storage device, a battery used in electronic equipment, etc.

Optionally, the electrical load 330 may be a street lamp or household appliance, a motor vehicle, etc. The energy storage device 100 is used to store the electric energy and supply it to the street lamp and household appliance for use when the electricity price is at a peak, or to supply power when the power grid is off/out of power.

It can be understood that the energy storage device 100 may comprise, but is not limited to, at least one of a single cell, a battery module, a battery pack, a battery system, etc. The single cell may be, but is not limited to, at least one of a cylindrical battery, a square battery, etc.

It can be understood that the drawings in this implementation illustrate only one form of the energy storage system 300, and cannot be understood as a limitation on the energy storage system 300 provided in the present application, nor can it be understood as a limitation on the energy storage device 100 provided in each implementation of the present application.

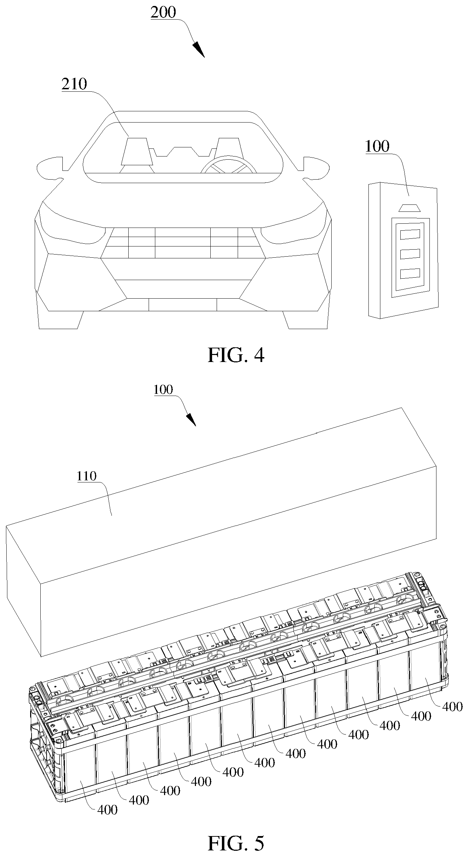

FIG. 4 is a structural schematic diagram of an electrical system 200 of an embodiment of the present application. Referring to FIG. 4, the embodiment of the present application also provides an electrical system 200. The electrical system 200 comprises: an electrical equipment 210 and an energy storage device 100. The energy storage device 100 supplies power to the electrical equipment 210.

The electrical equipment 210 of the embodiment of the present application may be, but is not limited to, a portable electronic device such as a mobile phone, a tablet computer, a laptop computer, a desktop computer, a smart bracelet, a smart watch, an e-reader, a game console, etc. It may also be a means of transportation such as an automobile, a truck, a car, a lorry, a delivery car, a railway high-speed, a high-speed railway, an electric automatic vehicle, etc. In addition, it may also be various household appliances such as a refrigerator, a light, an air conditioner, etc.

It can be understood that the electrical equipment 210 in the drawings of the present application is exemplified by the automobile, and the electrical system 200 illustrated in the drawings of the present application is only one form of the electrical equipment 210, and cannot be understood as a limitation on the electrical system 200 and the electrical equipment 210 provided in the present application.

Referring to FIG. 5, the embodiment of the present application also provides an energy storage device 100. The energy storage device 100 comprises a box 110 and a plurality of batteries 400. The battery 400 may be, but is not limited to, a lithium-ion secondary battery 400, a lithium-ion primary battery 400, a lithium-sulfur battery 400, a sodium-lithium-ion battery 400, a sodium-ion battery 400 or a magnesium-ion battery 400, an energy storage battery 400, etc.

The term "a plurality of" means greater than or equal to two.

It can be understood that the plurality of batteries 400 of the energy storage device 100 may be connected in parallel with each other; or in series with each other; or partially in parallel and partially in series (in other words, mixed connection). The present application does not specifically limit the connection method of the plurality of batteries 400 of the same energy storage device 100.

It can be understood that the box 110 has a receiving cavity, and the plurality of batteries 400 are accommodated in the receiving cavity. In some embodiments, each receiving cavity accommodates one battery 400. In other embodiments, each receiving cavity accommodates multiple batteries 400.

In the field of energy storage, the capacity of a single cell (i.e., the battery 400) is getting bigger and bigger, such as 280Ah single cells, 300Ah single cells, and 320Ah single cells appearing in succession. The benefit of the increase in the capacity of the single cell is that the overall energy density of the cells is increased, and further advantages are obtained in terms of cost and energy density. However, due to the poor heat dissipation and high energy of large cells, once overcharge occurs, heat is easily accumulated, which brings challenges to the safety performance of the cells.

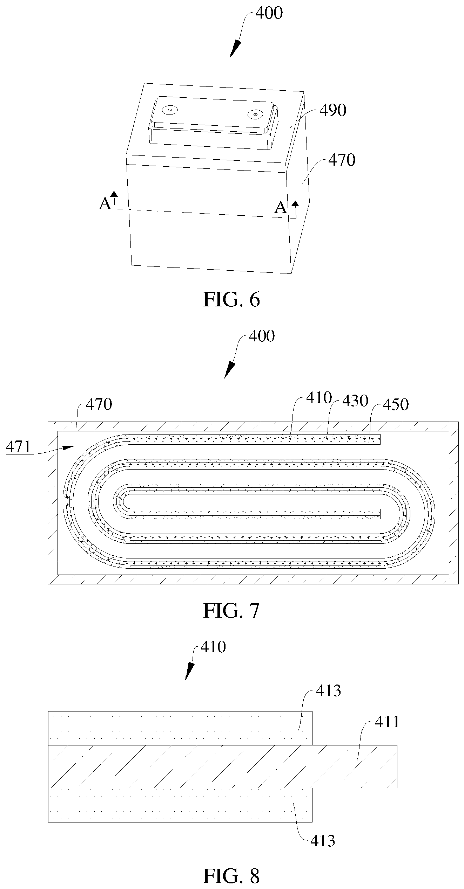

Referring to FIGs. 6 and 7, the embodiment of the present application further provides a battery 400. The battery 400 comprises a negative electrode sheet 410 and an electrolyte (not shown in the figure). The negative electrode sheet 410 comprises a negative electrode material (not shown in the figure). When the state of charge of the battery 400 ranges from 95% to 105%, the differential scanning calorimetry curve (DSC curve or DSC spectrum for short) of the mixture of the negative electrode material and the electrolyte has a first exothermic peak, a second exothermic peak and a third exothermic peak. The peak temperature of the first exothermic peak is T1, the peak temperature of the second exothermic peak is T2, and the peak temperature of the third exothermic peak is T3. The battery 400 satisfies the relationship: 2≤(T2-T1)/(T3-T2)≤4.5.

It can be understood that the peak temperature of the first exothermic peak is less than the peak temperature of the second exothermic peak, and the peak temperature of the second exothermic peak is less than the peak temperature of the third exothermic peak.

It can be understood that when performing the differential scanning calorimetry curve test, the negative electrode material is the negative electrode material of the negative electrode sheet 410 in a fully charged state. That is, when the battery 400 is charged to a fully charged state, i.e., when the state of charge of the battery 400 ranges from 95% to 105%, the battery 400 is disassembled, the negative electrode sheet 410 is removed, and the negative electrode material on the negative electrode sheet 410 is scraped off with a ceramic blade and mixed with the electrolyte to form a mixture of the negative electrode material and the electrolyte. Then, the mixture is subjected to a differential scanning calorimetry curve test.

It can be noted that when the state of charge of the battery 400 ranges from 95% to 105%, the battery 400 is in a fully charged state, that is, the battery 400 has been fully charged at this time. In other words, when the battery 400 is fully charged, the state of charge of the battery 400 may be, but is not limited to, 95%, 96%, 97%, 98%, 99%, 100%, 101%, 102%, 103%, 104%, 105%, etc.

It can be noted that the first exothermic peak is an exothermic peak of the decomposition of the solid electrolyte interface film (SEI film) of the negative electrode sheet 410 or the negative electrode material. The second exothermic peak is an exothermic peak of the reaction between the electrolyte and the negative electrode material. The heat generated by the second exothermic peak is the fastest, the temperature rises the fastest, and it is most likely to cause thermal runaway. The third exothermic peak is an exothermic peak of the decomposition of the binder or the like in the negative electrode material.

It can be noted that the peak temperature of the first exothermic peak refers to a temperature when the heat release rate of the first exothermic peak is the fastest, that is, a temperature of the highest point of the first exothermic peak. The peak temperature of the second exothermic peak refers to a temperature when the heat release rate of the second exothermic peak is the fastest, that is, the temperature of the highest point of the second exothermic peak. The peak temperature of the third exothermic peak refers to a temperature when the heat release rate of the third exothermic peak is the fastest, that is, the temperature of the highest point of the third exothermic peak.

The difference between the peak temperature T2 of the second exothermic peak and the peak temperature T1 of the first exothermic peak is defined as ΔT1, then ΔT1=T2-T1. The difference between the peak temperature T3 of the third exothermic peak and the peak temperature T2 of the second exothermic peak is defined as ΔT2, then ΔT2=T3-T2, and 2≤ΔT1/ΔT2≤4.5.

For example, ΔT1/ΔT2 may be, but is not limited to, 2, 2.2, 2.4, 2.6, 2.8, 3.0, 3.2, 3.4, 3.6, 3.8, 4.0, 4.2, 4.4, 4.5, etc. If ΔT1/ΔT2 is too large, it means that the second exothermic peak moves backward and is closer to the third exothermic peak. This means that the reaction between the negative electrode material and the electrolyte is late and there may be more binders in the negative electrode material, which can improve the heat resistance of the battery 400. However, it will reduce the cycle performance of the battery 400 and the cycle capacity retention rate of the battery 400. If ΔT1/ΔT2 is too small, it means that the second exothermic peak moves forward or advances and is closer to the first exothermic peak. This means that the reaction between the negative electrode material and the electrolyte is too early, heat is released too quickly, and the peak temperature is reached very quickly. The battery 400 is more likely to have thermal runaway such as smoke, fire, and explosion during use or in an overcharged state, which reduces the safety performance of the battery 400. When ΔT1/ΔT2 is between 2 and 4.5, the heat resistance of the battery 400 is improved, and the battery 400 can have relatively good cycle performance and high cycle capacity retention rate.

Further, the battery 400 satisfies the relationship: 2.5≤ΔT1/ΔT2≤4. When the battery 400 satisfies this relationship, the battery 400 has a relatively high capacity retention rate and has relatively good heat resistance and overcharge resistance.

Furthermore, the battery 400 satisfies the relationship: 2.8≤ΔT1/ΔT2≤3.5. When the battery 400 satisfies this relationship, the battery 400 has a relatively high capacity retention rate and has relatively good heat resistance and overcharge resistance.

The battery 400 of the embodiment of the present application comprises a negative electrode sheet 410 and an electrolyte. The negative electrode sheet 410 comprises a negative electrode material. When the battery 400 is fully charged, the DSC curve of the mixture of the negative electrode material and the electrolyte has a first exothermic peak, a second exothermic peak and a third exothermic peak. The difference ΔT1 between the peak temperature of the second exothermic peak and the peak temperature of the first exothermic peak and the difference ΔT2 between the peak temperature of the third exothermic peak and the peak temperature of the second exothermic peak satisfy 2≤ΔT1/ΔT2≤4.5. In this case, the battery 400 can have good cycle performance and good heat resistance. In addition, when the battery 400 is overcharged, it has a relatively low temperature and is less prone to safety accidents such as smoke, fire or explosion. Thus, it has good overcharge resistance.

In some embodiments of the present application, the battery 400 also satisfies the relationship: 50°C≤T2-T1≤150°C. In other words, the difference between the peak temperature T2 of the second exothermic peak and the peak temperature T1 of the first exothermic peak is: 50°C≤ΔT1≤150°C. For example, T2-T1 may be, but is not limited to, 50°C, 60°C, 70°C, 80°C, 90°C, 100°C, 110°C, 120°C, 130°C, 140°C, 150°C, etc. If T2-T1 is too small (i.e., ΔT1 is too small), it means that the second exothermic peak moves forward or advances and closer to the first exothermic peak, indicating that the reaction between the negative electrode material and the electrolyte is too early, the heat is released too quickly, and the peak temperature is reached quickly. The battery 400 is more likely to have thermal runaway such as smoke, fire, explosion, etc. during use or in an overcharged state, which reduces the safety performance of the battery 400. If T2-T1 is too large, the second exothermic peak moves backward and closer to the third exothermic peak, which means that the reaction between the negative electrode material and the electrolyte is late, and there may be more binders in the negative electrode material, which can improve the heat resistance of the battery 400, but will reduce the cycle performance of the battery 400 and reduce the cycle capacity retention rate of the battery 400.

Further, the difference between the peak temperature T2 of the second exothermic peak and the peak temperature T1 of the first exothermic peak is: 65°C≤ΔT1≤130°C. When the difference between the peak temperature T2 of the second exothermic peak and the peak temperature T1 of the first exothermic peak is within this range, the battery 400 can have good cycle performance and good heat resistance. When the battery 400 is overcharged, it has a relatively low temperature and is less prone to safety accidents such as smoke, fire or explosion, thereby having good overcharge resistance.

In some embodiments of the present application, the battery 400 satisfies the relationship: 10°C≤T3-T2≤120°C. In other words, the difference between the peak temperature T3 of the third exothermic peak and the peak temperature T2 of the second exothermic peak is: 10°C≤ΔT2≤120°C. For example, T3-T2 may be, but is not limited to, 10°C, 20°C, 30°C, 40°C, 50°C, 60°C, 70°C, 80°C, 90°C, 100°C, 110°C, 120°C, etc. If T3-T2 is too small (i.e., ΔT2 is too small), the second exothermic peak is too close to the third exothermic peak, and the second exothermic peak shifts or deviates backward. It indicates that the content of the binder in the negative electrode material is too much, which can improve the heat resistance of the battery 400, but will reduce the cycle performance of the battery 400 and the cycle capacity retention rate of the battery 400. If T3-T2 is too large (i.e., ΔT2 is too large), the second exothermic peak is too far from the third exothermic peak. It indicates that the second exothermic peak is shifted forward, the reaction between the negative electrode material and the electrolyte is advanced or too early, and the peak temperature of the second exothermic peak is reached too quickly. The battery 400 is more likely to have thermal runaway such as smoke, fire, explosion, etc. during use or in an overcharged state, which reduces the safety performance of the battery 400.

Further, the difference between the peak temperature T3 of the third exothermic peak and the peak temperature T2 of the second exothermic peak is 20°C≤T3-T2≤80°C. When the difference between the peak temperature T3 of the third exothermic peak and the peak temperature T2 of the second exothermic peak is within this range, the negative electrode material of the battery 400 can react with the electrolyte at the appropriate time. It has good safety performance and a suitable binder, so that the battery 400 has good heat resistance. When the battery 400 is overcharged, it has a relatively low temperature and is less prone to safety accidents such as smoke, fire or explosion, thereby having good overcharge resistance.

In some embodiments of the present application, the range of the peak temperature T1 of the first exothermic peak is: 110°C≤T1≤190°C. For example, the peak temperature T1 of the first exothermic peak may be, but is not limited to, 110°C, 120°C, 130°C, 140°C, 150°C, 160°C, 170°C, 180°C, 190°C, etc. In this embodiment, if the peak temperature T1 of the first exothermic peak is too small, it means that the SEI film decomposes too early. If the SEI film decomposes too early, it will cause the loss of active lithium in the electrolyte, so that the capacity of the battery 400 is low. If the peak temperature T1 of the first exothermic peak is too large, it means that the SEI film decomposes late, and the heat resistance of the battery 400 is improved, but it may cause the cycle performance to decay too quickly.

Further, the range of the peak temperature T1 of the first exothermic peak is: 130°C≤T1≤175°C. In this way, the battery 400 can have a relatively high capacity and a relatively high cycle capacity retention rate.

In some embodiments of the present application, the range of the peak temperature T2 of the second exothermic peak is: 200°C≤T2≤265°C. For example, the peak temperature T2 of the second exothermic peak may be, but is not limited to, 200°C, 205°C, 210°C, 220°C, 230°C, 240°C, 250°C, 260°C, 265°C, etc. In this embodiment, if the peak temperature T2 of the second exothermic peak is too small, it means that the second exothermic peak moves forward, the reaction between the negative electrode material and the electrolyte is advanced or too early, and the peak temperature of the second exothermic peak is reached too quickly. The battery 400 is more likely to have thermal runaway such as smoke, fire, explosion, etc. during use or in an overcharged state, which reduces the safety performance of the battery 400. If the peak temperature T2 of the second exothermic peak is too large, the second exothermic peak moves backward or is located at a slightly backward position, indicating that the content of the binder in the negative electrode material is too much, which can improve the heat resistance of the battery 400, but will reduce the cycle performance of the battery 400 and the cycle capacity retention rate of the battery 400. When the peak temperature T2 of the second exothermic peak is in this range, the battery 400 can have a relatively good overcharge resistance and a relatively high cycle capacity retention rate.

Further, the range of the peak temperature T2 of the second exothermic peak is: 225°C≤T2≤260°C. When the peak temperature T2 of the second exothermic peak is within this range, the battery 400 can have a relatively good overcharge resistance and a relatively high cycle capacity retention rate.

In some embodiments of the present application, the peak temperature T3 of the third exothermic peak is in the range of 270°C≤T3≤320°C. For example, the peak temperature T3 of the third exothermic peak may be, but is not limited to, 270°C, 280°C, 290°C, 300°C, 310°C, 320°C, etc. If the peak temperature of the third exothermic peak is too high, it may bring a risk of low capacity to the battery 400. If the peak temperature of the third exothermic peak is too low, it is easy to reduce the heat resistance of the battery 400.

Further, the peak temperature T3 of the third exothermic peak is in the range of 280°C≤T3≤300°C. In this way, the battery 400 can have a relatively high capacity and a relatively good heat resistance, thereby having relatively good overcharge resistance.

Optionally, the temperature interval T1' of the first exothermic peak is in the range of 100°C≤T1'≤200°C. It can be understood that the starting temperature and the ending temperature of the first exothermic peak are both between 100°C and 200°C. It can also be understood that the first exothermic peak is in any interval between 100°C and 200°C. For example, the temperature interval T1' of the first exothermic peak may be, but is not limited to, an interval between any two values of 100°C, 110°C, 120°C, 130°C, 140°C, 150°C, 160°C, 170°C, 180°C, 190°C, 200°C, etc. For example, the range of the temperature interval T1' of the first exothermic peak is 110°C≤T1'≤150°C. For another example, the range of the temperature interval T1' of the first exothermic peak is 130°C≤T1'≤170°C. For another example, the range of the temperature interval T1' of the first exothermic peak is 120°C≤T1'≤150°C, etc.

Optionally, the range of the temperature interval T2' of the second exothermic peak is 150°C≤T2'≤290°C. It can be understood that the starting temperature and the ending temperature of the second exothermic peak are both between 180°C and 290°C. It can also be understood that the second exothermic peak is in any interval between 190°C and 290°C. For example, the temperature interval T2' of the second exothermic peak may be, but is not limited to, the interval between any two values of 150°C, 160°C, 170°C, 180°C, 190°C, 200°C, 210°C, 220°C, 230°C, 240°C, 250°C, 260°C, 270°C, 280°C, 290°C, etc. For example, the range of the temperature interval T2' of the second exothermic peak is 200°C≤T2'≤210°C. For another example, the range of the temperature interval T2' of the second exothermic peak is 220°C≤T2'≤260°C. For another example, the range of the temperature interval T2' of the second exothermic peak is 230°C≤T2'≤250°C, etc.

Optionally, the temperature interval T3' of the third exothermic peak is in the range of 250°C≤T3'≤350°C. It can be understood that the starting temperature and the ending temperature of the third exothermic peak are both between 250°C and 350°C. It can also be understood that the third exothermic peak is in any interval between 250°C and 350°C. For example, the temperature interval T3' of the third exothermic peak may be, but is not limited to, an interval between any two values of 250°C, 260°C, 270°C, 275°C, 280°C, 285°C, 290°C, 295°C, 300°C, 305°C, 310°C, 315°C, 320°C, 330°C, 340°C, 350°C, etc. For example, the temperature interval T3' of the third exothermic peak is in the range of 270°C≤T3'≤300°C. For another example, the temperature interval T3' of the third exothermic peak is in the range of 290°C≤T3'≤320°C. For another example, the temperature interval T3' of the third exothermic peak is in the range of 280°C≤T3'≤310°C, etc.

In some embodiments of the present application, in the mixture, the mass ratio M of the negative electrode material to the electrolyte is in the range of: 0.75≤M≤0.78. For example, in the mixture, the mass ratio M of the negative electrode material to the electrolyte may be, but is not limited to, 0.75, 0.755, 0.76, 0.765, 0.77, 0.775, 0.78, etc. When the mass ratio M of the negative electrode material to the electrolyte in the mixture is 0.75 to 0.78, the mass ratio of the negative electrode material to the electrolyte of the negative electrode sheet 410 in the battery 400 can be better matched, so that the heat resistance and overcharge resistance of the battery 400 can be more accurately measured and determined, and the safety performance of the battery 400 can be more accurately determined. If the mass ratio M of the negative electrode material to the electrolyte is too large, it means that there is too little electrolyte in the battery 400. In this case, the interface between the negative electrode material and the electrolyte is poorly infiltrated, and local lithium precipitation is likely to occur (i.e., during charging, LI of the positive electrode sheet runs to the negative electrode sheet 410, forming dead lithium, which will not return to the positive electrode even after the battery 400 is discharged). Therefore, the capacity of the battery 400 gradually decreases or decreases too quickly as the number of charge and discharge times increases, reducing the cycle capacity retention rate of the battery 400 and causing the cycle performance of the battery 400 to deteriorate. If the mass ratio M of the negative electrode material to the electrolyte is too small, it means that the content of the electrolyte is too high. In this case, after the battery 400 is fully charged, the expansion of the negative electrode sheet 410 easily causes the battery 400 to bulge, reducing the safety of the battery 400.

According to the invention, the electrolyte comprises lithium hexafluorophosphate (LIFP6) and lithium bis(fluorosulfonyl)imide (LiFSI). In the electrolyte, the mass ratio ε of the lithium hexafluorophosphate to the lithium bis(fluorosulfonyl)imide is in the range of 0.3≤ε≤20. For example, in the electrolyte, the mass ratio ε of the lithium hexafluorophosphate to the lithium bis(fluorosulfonyl)imide may be, but is not limited to, 0.3, 0.5, 1, 2, 4, 6, 8, 10, 12, 14, 16, 18, 20, etc. Lithium bis(fluorosulfonyl)imide has the advantages of high stability (decomposition temperature is higher than 200°C, in other words, it will not decompose below 200°C), excellent low temperature performance, good hydrolysis stability and being more friendly to the environment. Therefore, the lithium hexafluorophosphate and the lithium bis(fluorosulfonyl)imide with an appropriate ratio are used as the electrolyte, which can reduce the early heat generation of the battery 400 and improve the cycle performance of the battery 400. When the content of lithium bis(fluorosulfonyl)imide is too low, that is, when the mass ratio ε of the lithium hexafluorophosphate to the lithium bis(fluorosulfonyl)imide is too large, there is no obvious effect on reducing the early heat generation of the battery 400 and improving the cycle performance. When there is too much lithium bis(fluorosulfonyl)imide, that is, when the mass ratio ε of the lithium hexafluorophosphate to the lithium bis(fluorosulfonyl)imide is too small, the lithium bis(fluorosulfonyl)imide is easily oxidized on the surface of the positive electrode sheet, which brings the risk of deterioration of the high temperature performance of the battery 400. Moreover, too much lithium bis(fluorosulfonyl)imide can easily increase the viscosity of the electrolyte, reduce the transmission rate of lithium ions, and reduce the dynamic performance. Furthermore, lithium bis(fluorosulfonyl)imide with excessive concentration is easy to decompose at high potential, generate more heat at high temperature, and has the risk of explosion, which reduces the safety performance of the battery 400.

Further, in the electrolyte, the mass ratio ε of the lithium hexafluorophosphate to the lithium bis(fluorosulfonyl)imide may be in the range of: 0.5≤ε≤10. In this way, the battery 400 can not only have a relatively high cycle capacity retention rate, but also have relatively good heat resistance and overcharge resistance, and the safety performance of the battery 400 is improved.

Still further, in the electrolyte, the mass ratio ε of the lithium hexafluorophosphate to the lithium bis(fluorosulfonyl)imide may be in the range of 0.6≤ε≤5. In this way, the battery 400 can not only have a relatively high cycle capacity retention rate, but also have relatively good heat resistance and overcharge resistance, and the safety performance of the battery 400 is improved.

In some embodiments, the electrolyte further comprises an organic solvent. The organic solvent comprises at least one of ethylene carbonate, dimethyl carbonate, or ethyl methyl carbonate.

In some embodiments, the electrolyte further comprises an additive. The additive comprises at least one of vinylene carbonate (VC for short) and fluoroethylene carbonate (FEC for short). In this embodiment, adding an additive to the electrolyte can improve the overcharge performance of the battery 400.

Optionally, the mass fraction of vinylene carbonate in the electrolyte ranges from 0% to 5%. For example, the mass fraction of the vinylene carbonate in the electrolyte may be, but is not limited to, 0%, 0.5%, 1%, 2%, 3%, 4%, 5%, etc.

Optionally, the mass fraction of the fluoroethylene carbonate in the electrolyte ranges from 0% to 3%. For example, the mass fraction of the fluoroethylene carbonate in the electrolyte may be, but is not limited to, 0%, 0.5%, 1%, 1.5%, 2%, 2.5%, 3%, etc.

In the embodiment of the present application, when it comes to a range *a* to b of a numerical value, if not specifically specified, it means that the numerical value may be any numerical value between *a* and b, comprising the endpoint value *a* and the endpoint value b.

Optionally, the negative electrode material comprises negative electrode active particles, a first conductive agent, a thickener and a first binder.

Optionally, the negative electrode active particles may be, but are not limited to, at least one of graphite, natural graphite, artificial graphite, silicon-carbon negative electrode active particles, hard carbon, etc.

Optionally, the first conductive agent may be, but is not limited to, conductive carbon black (SP for short). The thickener may be, but is not limited to, sodium carboxymethyl cellulose (CMC for short). The first binder may be, but is not limited to, styrene-butadiene latex or styrene-butadiene rubber (SBR for short).

In some embodiments of the present application, the negative electrode material comprises negative electrode active particles, and the particle size of the negative electrode active particles in the overcharge state ranges from 12µm≤D50≤18µm. For example, the D50 particle size of the negative electrode active particles may be, but is not limited to, 12µm, 13µm, 14µm, 15µm, 16µm, 17µm, 18µm, etc.

In this embodiment, when the D50 of the negative electrode active particles is too large, the negative electrode active particles are prone to cracking during the rolling process when preparing the negative electrode sheet 410 and during the charge and discharge cycle. In addition, if the size of the negative electrode active particles is too large, the specific surface area of the negative electrode active particles is small, the contact between the negative electrode material and the electrolyte is less, and the ion transmission rate is reduced, which makes the dynamic performance of the battery 400 worse. In addition, the lithium deposition process is prone to lithium accumulation, which is easy to cause lithium precipitation, thereby reducing the cycle performance of the battery 400. Furthermore, it will increase side reactions, increase heat release, and reduce the safety performance of the battery 400. If the D50 of the negative electrode active particles is too small, the contact area between the negative electrode active particles and the electrode liquid is large, and more lithium salts need to be consumed when the SEI film is formed, which deteriorates the cycle performance of the battery 400. In addition, the reaction between the negative electrode active particles and the electrolyte is too fast during the charging process, the heat generation is too large, and the temperature rises too fast, which is prone to thermal runaway and other safety accidents, reducing the safety performance of the battery 400.

D50 particle size refers to a particle size corresponding to when a percentage of the cumulative particle size distribution of a sample reaches 50%.

Referring to FIG. 8 together, optionally, the negative electrode sheet 410 also comprises a negative electrode collector 411 and a negative electrode active layer 413, and the negative electrode active layer is arranged on the surface of the negative electrode collector 411. The negative electrode active layer 413 is formed by coating the surface of the negative electrode collector 411 with a slurry formed by the negative electrode material, and then subjecting to drying, rolling and other processes.

Optionally, the negative electrode collector 411 may be, but is not limited to, a copper sheet.

Referring to FIG. 7 again, optionally, the battery 400 also comprises a separator 430 and a positive electrode sheet 450, and the positive electrode sheet 450 and the negative electrode sheet 410 are arranged on opposite sides of the separator 430.

It can be understood that the positive electrode sheet 450, the separator 430 and the negative electrode sheet 410 are stacked in sequence. It can be understood that the positive electrode sheet 450 and the negative electrode sheet 410 are at least partially immersed in the electrolyte.

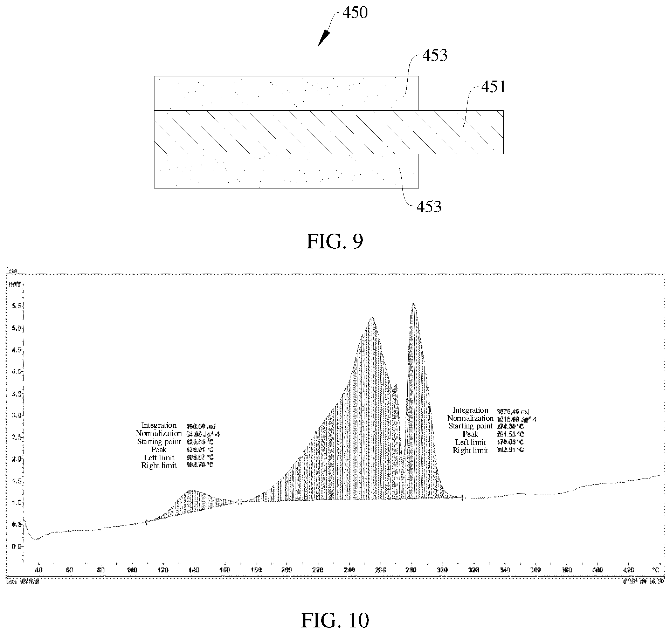

Referring to FIG. 9, optionally, the positive electrode sheet 450 comprises a positive current collector 451 and a positive active layer 453, and the positive active layer 453 is arranged on the surface of the positive current collector 451.

Optionally, the positive active layer 453 comprises positive active particles, a second conductive agent and a second binder. Optionally, the positive active particles may be, but are not limited to, lithium iron phosphate. The second conductive agent may be, but is not limited to, conductive carbon black. The second binder may be, but is not limited to, polyvinylidene fluoride (PVDF for short).

Optionally, the positive current collector 451 may be, but is not limited to, an aluminum sheet.

Optionally, the separator 430 may be, but is not limited to, at least one of a polypropylene film (PP) or a polyethylene film (PE).

Referring to FIGs. 6 and 7 again, in some embodiments, the battery 400 further comprises a housing 470 and a cover plate 490. The housing 470 has a receiving cavity 471. The receiving cavity 471 is used to arrange the negative electrode sheet 410, the separator 430, the positive electrode sheet 450 and the electrolyte. The cover plate 490 is used to close the receiving cavity 471. It can be understood that the stacked negative electrode sheet 410, separator 430 and positive electrode sheet 450 constitute an electrode assembly, and the electrode assembly is arranged in the receiving cavity 471 in a winding structure or a stacked structure.

The battery 400 of the embodiment of the present application is further described below through specific embodiments.

### First to seventh embodiments, first to third comparative examples

The batteries 400 of individual embodiments and comparative examples are prepared by the following steps.
(1) Preparation of positive electrode sheet 450: Lithium iron phosphate (positive electrode active particles), conductive carbon black (second conductive agent SP), polyvinylidene fluoride (second binder PVDF) are dispersed in N-methylpyrrolidone (NMP for shot) solvent according to a mass ratio of 97:0.5:0.7, and PVDF of different mass percentages are added at the same time, and mixed evenly to obtain a positive electrode slurry. The positive electrode slurry is coated on the aluminum foil of the positive electrode current collector 451, and after drying, cold pressing, slitting, and cutting, the positive electrode sheet 450 is obtained.
(2) Preparation of negative electrode sheet 410: Artificial graphite (negative electrode active particles), conductive carbon black (first conductive agent SP), sodium carboxymethyl cellulose (thickener CMC) and styrene-butadiene rubber (first binder SBR) are dispersed in deionized water at a mass ratio of 96.5:0.5:1:2 and mixed evenly to obtain a negative electrode slurry. The negative electrode slurry is coated on the copper foil of the negative electrode current collector 411, and after drying, cold pressing, slitting and cutting, the negative electrode sheet 410 is obtained.
(3) Electrolyte configuration: In an argon-atmosphere glove box with a moisture content of ≤1ppm, ethylene carbonate, dimethyl carbonate and ethyl methyl carbonate are mixed at a mass ratio of 1:1:1 as an organic solvent. The dry electrolyte, i.e., lithium hexafluorophosphate and lithium bis(fluorosulfonyl)imide, is added and dissolved in the solvent in a certain proportion, stirred until completely dissolved and cooled to a room temperature. Finally, an additive is added and mixed evenly to obtain the electrolyte. The components and contents of the electrolytes of each embodiment and comparative example are shown in Table 1 below.

**Table 1 Compositions of the electrolytes of each embodiment and comparative example**

| Example | Lithium hexafluorophosphate (wt%) | Lithium bis(fluorosulfonyl)imide (wt%) | Vinylene carbonate (wt%) | Fluorinated ethylene carbonate (wt%) |
|---|---|---|---|---|
| First embodiment | 5% | 6.25% | 1% | 1% |
| Second embodiment | 5% | 6.25% | 1% | 1% |
| Third embodiment | 5% | 6.25% | 1.5% | 1% |
| Fourth embodiment | 8% | 2.67% | 1.5% | 1% |
| Fifth embodiment | 5% | 6.25% | 1.5% | 1% |
| Sixth embodiment | 5% | 6.25% | 1.5% | 1% |
| Seventh embodiment | 12% | 0.57% | 1% | 1% |
| First comparative example | 5% | 6.25% | / | 1% |
| Second comparative example | 5% | 6.25% | 1% | / |
| Third comparative example | 2% | 7.14% | 1% | 1% |

(4) Preparation of separator 430: 16um polyethylene film is used as the separator 430.
(5) Preparation of battery 400: The prepared positive electrode sheet 450, separator 430, and negative electrode sheet 410 are stacked in sequence to form an electrode assembly. The electrode assembly is wound to form a bare cell. After welding the tab, the cell is assembled into the housing 470. After injecting the prepared electrolyte, the cover plate 490 is welded, and the cell is encapsulated, placed, formed, shaped, and tested for capacity, etc. Finally, the battery 400 is prepared.

### Performance test of battery 400

(1) DSC test: The battery 400 is charged at a constant current at a charge rate of 0.5C to a voltage of 3.65V, and then charged at a constant voltage to a charging rate of 0.05C, so that the battery 400 is fully charged. After full charging, the battery 400 is disassembled, and the negative electrode sheet 410 is taken out. The negative electrode material (also known as negative electrode powder) on the surface is scraped off in a glove box. 0.78g of powder of the negative electrode sheet 410 and 1g of the electrolyte are mixed and placed in a gold-plated crucible, and DSC curve test is performed in a DSC device. During the test, the flow rate of nitrogen (N2) in the DSC device is 50ml/min, the heating rate is 5K/min (i.e., 5°C/min), and the temperature rise range is 30°C to 450°C (i.e., the temperature rises from 30°C to 450°C). T1, T2, T3 and ΔT1/ΔT2 of the battery 400 in each embodiment and each comparative example may refer to Table 2 below. The DSC test spectrum of the fifth embodiment is shown in FIG. 10.
(2) Cycle capacity retention rate test of battery 400: The battery 400 is subjected to a charge and discharge cycle test on a charge and discharge instrument. The test temperature is 45°C, the cycle rate is 1C (i.e., both the charge rate and the discharge rate are 1C), and the charging voltage is 2.5V to 3.65V. The capacity retention rate after n cycles of charge and discharge is calculated. The calculation formula of the capacity retention rate for cycle at 45°C is: Capacity retention rate after the n-th cycle = (discharge capacity after the n-th cycle/discharge capacity after the first cycle) × 100%. The capacity retention rate of the battery 400 after 1000 cycles in each embodiment and each comparative example may refer to Table 2 below.
(3) Overcharge test of battery 400

The battery 400 is tested on a charge and discharge instrument and left at (25±2)°C for 5h. The battery 400 is discharged at a discharge rate of 1C to 2.5V to drain the battery 400 completely. Then, the battery 400 is charged at a charge rate of 1C to 3.65V and left at rest for 10min. The battery 400 is transferred to the overcharge test instrument for testing. The battery 400 is charged at a constant current at a charge rate of 1C to make the voltage of the battery 400 reach 5.475V (i.e., the voltage is 1.5 times the voltage of the fully charged state), and observed for 1h. It is recorded whether the battery 400 has swelling, leakage, smoke, fire, or explosion, and the peak temperature T4 of the battery 400 when it is overcharged is measured. A temperature sensing line is set on the large surface (i.e., the surface with the largest area) of the battery 400 to measure the temperature data of the battery 400. The higher the temperature, the higher the probability of danger when the battery 400 is overcharged. The peak temperature T4 of the battery 400 when it is overcharged in each embodiment and each comparative example may refer to Table 2 below.

In the overcharge safety test, continuous charging causes the voltage to rise to 1.5 times Vmax (full charge voltage). At this time, the voltage of the cell increases during continuous charging, and the electrolyte undergoes oxidation reaction at the positive electrode. The reaction heat generated by the reaction accumulates in the cell. When the heat reaches a certain level, the reaction between the electrolyte and the positive electrode is further intensified under the action of high temperature, which may cause irreversible heat accumulation. Under the high temperature caused by this heat accumulation, the separator 430 melts and ruptures, resulting in contact between the positive and negative electrodes. At this time, the cell may catch fire or explode. The overcharge rating standards are as follows. 1) If the battery 400 does not leak, it reaches the first level of standard. 2) If the cell leaks but there is no smoke or thermal runaway, it reaches the second level of standard. 3) If the cell leaks, smokes, and has thermal runaway, but does not catch fire or explode, it reaches the third level of standard. 4) If the cell catches fire or explodes, it belongs to the fourth level, that is, it does not meet the standard.

**Table 2 Relevant parameters and test data of each embodiment and comparative example**

| Example | T1(°C) | T2(°C) | T3(°C) | ΔT1/ΔT2 | D50(µm) | ε | T4(°C) | 1000 cycle capacity retention rate |
|---|---|---|---|---|---|---|---|---|
| First embodiment | 140 | 260 | 290 | 4 | 14.2 | 0.8 | 95°C | 91.3% |
| Second embodiment | 140 | 252 | 290 | 2.95 | 16 | 0.8 | 100°C | 92.0% |
| Third embodiment | 142 | 250 | 292 | 2.57 | 14.2 | 0.8 | 102°C | 91.0% |
| Fourth embodiment | 140 | 250 | 292 | 2.62 | 14.2 | 3 | 105°C | 90.0% |
| Fifth embodiment | 135 | 255 | 300 | 2.67 | 11 | 0.8 | 140°C | 88.0% |
| Sixth embodiment | 140 | 250 | 290 | 2.75 | 19 | 0.8 | 90°C | 83.0% |
| Seventh embodiment | 139 | 250 | 290 | 2.78 | 14.2 | 21 | 120°C | 86.2% |
| First comparative example | 142.8 | 257 | 282 | 4.568 | 14.2 | 0.8 | 110°C | 83% |
| Second comparative example | 191 | 253 | 289 | 1.72 | 14.2 | 0.8 | 170°C | 91.0% |
| Third comparative example | 143 | 256 | 280 | 4.71 | 14.2 | 0.28 | 100°C | 83% |

From the test data of the first to seventh embodiments, it can be seen that when the value of ΔT1/ΔT2 is between 2 and 4.5, if the battery 400 is overcharged (i.e., overcharged to a voltage of 1.5 times the full charge voltage), the peak temperature (i.e., the maximum temperature) of the surface of the battery 400 is less than or equal to 140°C. The overcharge peak temperature is relatively low, and the battery 400 is not prone to thermal runaway risks such as leakage, smoke, fire, and explosion, and has high safety performance. In addition, after 1,000 charge and discharge cycles, the cycle capacity retention rate of the battery 400 is greater than 83%. The battery 400 has a relatively high cycle capacity retention rate.

From the measurement data of the first, third and fourth embodiments, it can be seen that when 2≤ΔT1/ΔT2≤4.5, as the value of ΔT1/ΔT2 increases, if the battery 400 is overcharged, the peak temperature of the surface of the battery 400 tends to decrease. This is because the reaction time between the negative electrode active particles and the electrolyte is delayed, and the second exothermic peak moves backward and gradually approaches the third exothermic peak. In this case, the battery 400 has a relatively good overcharge resistance.

From the test data of the first and third embodiment, and the first and second comparative examples, it can be seen that when ΔT1/ΔT2 is between 2 and 4.5, if the battery 400 is overcharged, the peak temperature of the surface of the battery 400 is low, and it has good overcharge resistance and improved capacity retention rate. When ΔT1/ΔT2 is greater than 4.5 (such as the first comparative example), although the battery 400 also has good overcharge resistance, the cycle capacity retention rate is greatly reduced. When ΔT1/ΔT2 is less than 2 (such as the second comparative example), although the battery 400 has a high cycle capacity retention rate, if the battery 400 is overcharged, the peak temperature of the surface of the battery 400 is high, which reduces the overcharge resistance of the battery 400.

From the test data of the first to fourth and seventh embodiments, it can be seen that when the D50 of the negative electrode active particles is: 12µm≤D50≤18µm, and 2≤ΔT1/ΔT2≤4.5, if the battery 400 is overcharged (i.e., overcharged to a voltage of 1.5 times the full charge voltage), the peak temperature (i.e., the maximum temperature) of the surface of the battery 400 is between 95°C and 120°C. The battery 400 has a relatively low overcharge peak temperature, so that when the battery 400 is overcharged, it is less prone to thermal runaway risks such as leakage, smoking, fire, explosion, etc., and has relatively high safety performance.

It can be seen from the test data of the fifth embodiment that when the D50 of the negative electrode active particles is less than 12µm (i.e., D50=11µm), compared with the solution in the second embodiment where D50 is between 12µm and 18µm, the peak temperature of the battery 400 during overcharging is 140°C. The battery 400 has a relatively high overcharge peak temperature. This is because the contact area between the negative electrode active particles and the electrode liquid is large, and the negative electrode active particles react faster with the electrolyte during charging, generating more heat, and therefore have a higher overcharge peak temperature. Compared with the solutions of the first to fourth and seventh embodiments, the battery 400 in the fifth embodiment has a higher overcharge peak temperature, and is more prone to safety accidents such as thermal runaway, which reduces the safety performance of the battery 400. In addition, the negative electrode active particles react faster with the electrode liquid, and the temperature rises too quickly, accelerating the formation of by-products. Therefore, compared with the first to fourth embodiments, the fifth embodiment has a smaller cycle capacity retention rate.

It can be seen from the test data of the sixth embodiment that when the D50 of the negative electrode active particles is greater than 18µm (i.e., D50=19µm), compared with the solution in the second embodiment where D50 is between 12µm and 18µm, the peak temperature of the battery 400 during overcharging is 90°C. The battery 400 has a lower overcharge peak temperature. This is because the specific surface area of the negative electrode active particles is small, the negative electrode material has less contact with the electrolyte, the reaction is slower, and the heat release is less. In this case, the overcharge peak temperature is lower. In addition, the ion transmission rate is reduced, which makes the dynamic performance of the battery 400 worse. The deposition process of lithium during charging is prone to lithium accumulation, which is prone to lithium precipitation, thereby reducing the cycle performance of the battery 400. Therefore, the cycle capacity retention rate is reduced compared with the first to fourth embodiments.

The reference to "embodiment" and "implementation " in the present application means that the specific features, structures or characteristics described in conjunction with the embodiments may be comprised in at least one embodiment of the present application. The appearance of the phrases in various places in the specification does not necessarily refer to the same embodiment, nor is it an independent or alternative embodiment that is mutually exclusive with other embodiment(s). It is explicitly and implicitly understood by those skilled in the art that the embodiments described in the present application can be combined with other embodiment(s), within the scope of the appended claims.

Finally, it can be noted that the above implementations are only used to illustrate the technical solutions of the present application and are not intended to limit them. Although the present application has been described in detail with reference to the above implementations, a person of ordinary skill in the art can understand that the technical solutions of the present application may be modified, within the scope of the appended claims.

## Claims

1. A battery (400), comprising a negative electrode sheet (410) and an electrolyte, wherein the negative electrode sheet (410) comprises a negative electrode material, and in a case that a state of charge of the battery (400) ranges from 95% to 105%, a differential scanning calorimetry curve of a mixture of the negative electrode material and the electrolyte has a first exothermic peak, a second exothermic peak and a third exothermic peak, a peak temperature of the first exothermic peak is T1, a peak temperature of the second exothermic peak is T2, and a peak temperature of the third exothermic peak is T3, wherein the battery (400) satisfies a relationship: 2≤(T2-T1)/(T3-T2)≤4.5, whereby the differential scanning calorimetry curve is obtained according to the measurement conditions defined in the description, **characterized in that** the electrolyte comprises lithium hexafluorophosphate and lithium bis(fluorosulfonyl)imide, and in the electrolyte, a mass ratio ε of the lithium hexafluorophosphate to the lithium bis(fluorosulfonyl)imide is in a range of 0.3 ≤ ε ≤ 20.

2. The battery (400) according to claim 1, wherein the battery (400) further satisfies a relationship: 50°C≤T2-T1≤150°C.

3. The battery (400) according to claim 1, wherein the battery (400) satisfies a relationship: 10°C≤T3-T2≤120°C.

4. The battery (400) according to claim 1, wherein the peak temperature T1 of the first exothermic peak is in a range of 110°C ≤ T1 ≤ 190°C.

5. The battery (400) according to claim 1, wherein the peak temperature T2 of the second exothermic peak is in a range of 200°C ≤ T2 ≤ 265°C.

6. The battery (400) according to claim 1, wherein the peak temperature T3 of the third exothermic peak is in a range of 270°C ≤ T3 ≤ 320°C.

7. The battery (400) according to any one of claims 1 to 6, wherein in the mixture, a mass ratio M of the negative electrode material to the electrolyte is in a range of 0.75 ≤ M ≤ 0.78.

8. The battery (400) according to any one of claims 1 to 6, wherein the negative electrode material comprises negative electrode active particles, and a D50 particle size of the negative electrode active particles is in a range of: 12µm≤D50≤18µm.

9. An energy storage device (100), comprising:
a box (110); and
a plurality of batteries (400) according to any one of claims 1 to 8, wherein the plurality of batteries (400) are accommodated in the box (110), and a connection manner of the plurality of batteries (400) comprises at least one of a series connection or a parallel connection.

10. An electrical system (200), comprising:
an electrical equipment (210); and
an energy storage device (100) according to claim 9, wherein the energy storage device (100) supplies power to the electrical equipment (210).

11. An energy storage system (300), comprising:
an electric energy conversion device (310), wherein the electric energy conversion device (310) is configured to convert energy of other form into an electric energy;
an energy storage device (100) according to claim 9, wherein the energy storage device (100) is electrically connected to the electric energy conversion device (310), and is configured to store the electric energy of the electric energy conversion device (310); and
an electrical load (330), wherein the electrical load is electrically connected to the electric energy conversion device (310) and the energy storage device (100), respectively, and is configured to work using the electric energy of the electric energy conversion device (310) or the energy storage device (100).

## Patentansprüche

1. Batterie (400), umfassend eine negative Elektrodenfolie (410) und einen Elektrolyten, wobei die negative Elektrodenfolie (410) ein negatives Elektrodenmaterial umfasst, und wobei, wenn der Ladezustand der Batterie (400) im Bereich von 95 % bis 105 % liegt, eine Differential-Scanning-Kalorimetrie-Kurve einer Mischung aus dem negativen Elektrodenmaterial und dem Elektrolyten einen ersten exothermen Peak, einen zweiten exothermen Peak und einen dritten exothermen Peak aufweist, wobei eine Peak-Temperatur des ersten exothermen Peaks T1 ist, eine Peak-Temperatur des zweiten exothermen Peaks T2 ist und eine Peak-Temperatur des dritten exothermen Peaks T3 ist, wobei die Batterie (400) eine folgende Beziehung erfüllt: 2 ≤ (T2 - T1) / (T3 - T2) ≤ 4,5, wobei die Differential-Scanning-Kalorimetrie-Kurve gemäß den in der Beschreibung definierten Messbedingungen erhalten wird,
**dadurch gekennzeichnet, dass** der Elektrolyt Lithiumhexafluorophosphat und Lithiumbis(fluorsulfonyl)imid umfasst und im Elektrolyt ein Massenverhältnis ε des Lithiumhexafluorophosphats zum Lithiumbis(fluorsulfonyl)imid in einem Bereich von 0,3 ≤ ε ≤ 20 liegt.

2. Batterie (400) gemäß Anspruch 1, wobei die Batterie (400) ferner eine folgende Beziehung erfüllt: 50 °C ≤ T2 - T1 ≤ 150 °C.

3. Batterie (400) gemäß Anspruch 1, wobei die Batterie (400) eine folgende Beziehung erfüllt: 10 °C ≤ T3 - T2 ≤ 120 °C.

4. Batterie (400) gemäß Anspruch 1, wobei die Peak-Temperatur T1 des ersten exothermen Peaks in einem Bereich von 110 °C ≤ T1 ≤ 190 °C liegt.

5. Batterie (400) gemäß Anspruch 1, wobei die Peak-Temperatur T2 des zweiten exothermen Peaks in einem Bereich von 200 °C ≤ T2 ≤ 265 °C liegt.

6. Batterie (400) gemäß Anspruch 1, wobei die Peak-Temperatur T3 des dritten exothermen Peaks in einem Bereich von 270 °C ≤ T3 ≤ 320 °C liegt.

7. Batterie (400) gemäß einem der Ansprüche 1 bis 6, wobei in der Mischung ein Massenverhältnis M des negativen Elektrodenmaterials zum Elektrolyten in einem Bereich von 0,75 ≤ M ≤ 0,78 liegt.

8. Batterie (400) gemäß einem der Ansprüche 1 bis 6, wobei das negative Elektrodenmaterial aktive Partikel der negativen Elektrode umfasst und eine Partikelgröße D50 der aktiven Partikel der negativen Elektrode in einem Bereich von 12 µm ≤ D50 ≤ 18 µm liegt.

9. Energiespeichervorrichtung (100), umfassend:
ein Gehäuse (110); und
eine Vielzahl von Batterien (400) gemäß einem der Ansprüche 1 bis 8, wobei die Vielzahl von Batterien (400) in dem Gehäuse (110) untergebracht ist und eine Verbindungsart der Vielzahl von Batterien (400) mindestens eines einer Reihenschaltung und einer Parallelschaltung umfasst.

10. Elektrisches System (200) umfassend:
ein elektrisches Gerät (210); und
eine Energiespeichervorrichtung (100) gemäß Anspruch 9, wobei die Energiespeichervorrichtung (100) das elektrische Gerät (210) mit Strom versorgt.

11. Energiespeichersystem (300), umfassend:
eine elektrische Energieumwandlungsvorrichtung (310), wobei die elektrische Energieumwandlungsvorrichtung (310) dazu konfiguriert ist, Energie einer anderen Form in eine elektrische Energie umzuwandeln;
eine Energiespeichervorrichtung (100) gemäß Anspruch 9, wobei die Energiespeichervorrichtung (100) elektrisch mit der elektrischen Energieumwandlungsvorrichtung (310) verbunden ist und dazu konfiguriert ist, die elektrische Energie der elektrischen Energieumwandlungsvorrichtung (310) zu speichern; und
eine elektrische Last (330), wobei die elektrische Last jeweils elektrisch mit der elektrischen Energieumwandlungsvorrichtung (310) und der Energiespeichervorrichtung (100) verbunden ist und so konfiguriert ist, dass sie unter Verwendung der elektrischen Energie der elektrischen Energieumwandlungsvorrichtung (310) oder der Energiespeichervorrichtung (100) arbeitet.

## Revendications

1. Une batterie (400), comprenant une feuille d'électrode négative (410) et un électrolyte, dans laquelle la feuille d'électrode négative (410) comprend un matériau d'électrode négative, et dans un cas où un état de charge de la batterie (400) est compris entre 95 % et 105 %, une courbe de calorimétrie différentielle à balayage d'un mélange du matériau d'électrode négative et de l'électrolyte présente un premier pic exothermique, un deuxième pic exothermique et un troisième pic exothermique, une température de pic du premier pic exothermique est T1, une température de pic du deuxième pic exothermique est T2, et une température de pic du troisième pic exothermique est T3, la batterie (400) satisfaisant à une relation suivante : 2 ≤ (T2 - T1) / (T3 - T2) ≤ 4,5, la courbe de calorimétrie différentielle à balayage étant obtenue selon les conditions de mesure définies dans la description,
**caractérisée en ce que** l'électrolyte comprend de l'hexafluorophosphate de lithium et du bis(fluorosulfonyl)imide de lithium, et **en ce que**, dans l'électrolyte, un rapport massique ε entre l'hexafluorophosphate de lithium et le bis(fluorosulfonyl)imide de lithium se situe dans une plage de 0,3 ≤ ε ≤ 20.

2. Batterie (400) selon la revendication 1, dans laquelle la batterie (400) satisfait en outre à une relation suivante : 50 °C ≤ T2 - T1 ≤ 150 °C.

3. Batterie (400) selon la revendication 1, dans laquelle la batterie (400) satisfait à une relation suivante : 10 °C ≤ T3 - T2 ≤ 120 °C.

4. Batterie (400) selon la revendication 1, dans laquelle la température maximale T1 du premier pic exothermique se situe dans une plage de 110 °C ≤ T1 ≤ 190 °C.

5. Batterie (400) selon la revendication 1, dans laquelle la température maximale T2 du deuxième pic exothermique se situe dans une plage de 200 °C ≤ T2 ≤ 265 °C.

6. Batterie (400) selon la revendication 1, dans laquelle la température maximale T3 du troisième pic exothermique est comprise dans une plage de 270 °C ≤ T3 ≤ 320 °C.

7. Batterie (400) selon l'une quelconque des revendications 1 à 6, dans laquelle, dans le mélange, un rapport massique M entre le matériau d'électrode négative et l'électrolyte est compris dans une plage de 0,75 ≤ M ≤ 0,78.

8. Batterie (400) selon l'une quelconque des revendications 1 à 6, dans laquelle le matériau d'électrode négative comprend des particules actives d'électrode négative, et une taille de particule D50 des particules actives d'électrode négative est comprise dans une plage de : 12 µm ≤ D50 ≤ 18 µm.

9. Dispositif de stockage d'énergie (100), comprenant :
un boîtier (110) ; et
une pluralité de batteries (400) selon l'une quelconque des revendications 1 à 8, dans lequel la pluralité de batteries (400) est logée dans le boîtier (110), et le mode de connexion de la pluralité de batteries (400) comprend au moins l'un parmi une connexion en série ou une connexion en parallèle.

10. Système électrique (200), comprenant :
un équipement électrique (210) ; et
un dispositif de stockage d'énergie (100) selon la revendication 9, dans lequel le dispositif de stockage d'énergie (100) alimente l'équipement électrique (210) en énergie.

11. Système de stockage d'énergie (300), comprenant :
un dispositif de conversion d'énergie électrique (310), ledit dispositif de conversion d'énergie électrique (310) étant configuré pour convertir de l'énergie d'une autre forme en énergie électrique ;
un dispositif de stockage d'énergie (100) selon la revendication 9, dans lequel le dispositif de stockage d'énergie (100) est connecté électriquement au dispositif de conversion d'énergie électrique (310) et est configuré pour stocker l'énergie électrique provenant du dispositif de conversion d'énergie électrique (310) ; et
une charge électrique (330), dans lequel la charge électrique est connectée électriquement au dispositif de conversion d'énergie électrique (310) et au dispositif de stockage d'énergie (100), respectivement, et est configurée pour fonctionner en utilisant l'énergie électrique provenant du dispositif de conversion d'énergie électrique (310) ou du dispositif de stockage d'énergie (100).
